# EUROPEAN PATENT APPLICATION

(11) **EP 4 322 644 A1**
(43) Date of publication of application: **14.02.2024**
(21) Application number: 22794884.1
(22) Date of filing: 26.04.2022
(51) Int. Cl.: H04W 68/02

(54) **PAGING METHOD, COMMUNICATION APPARATUS, AND SYSTEM**

(30) Priority: 30.04.2021 CN 202110487443
(71) Applicant: Huawei Technologies Co., Ltd., Longgang Shenzhen, Guangdong 518129 (CN)
(72) Inventor: QU, Weilin, Shenzhen, Guangdong 518129 (CN); JIN, Zhe, Shenzhen, Guangdong 518129 (CN); LUO, Zhihu, Shenzhen, Guangdong 518129 (CN)
(74) Representative: Gill Jennings & Every LLP
(86) International application number: PCT/CN2022/089187
(87) International publication number: WO 2022/228414

(57) **Abstract**

This application provides a paging method, a communication apparatus, and a system. In the method, a terminal device sends first information to a first network device, where the first information includes a signal coverage level of the terminal device and whether the terminal device has a capability of receiving a first signal. The terminal device receives second information from the first network device, where the second information indicates the terminal device to receive the first signal or a second signal, the first signal is used to page or wake up the terminal device, the second signal is used to page the terminal device or indicates whether the terminal device receives paging, formats of the first signal and the second signal are different, and the formats include at least one of the following: coding, modulation, and multiple access. The terminal device receives, from the first network device, a signal indicated by the second information. According to this method, flexibility of receiving a paging message by the terminal device is improved. Based on a specific application scenario, the terminal device may receive a signal with lower power consumption during demodulation from a network device, to reduce power consumption of the terminal device.

## Description

This application claims priority to Chinese Patent Application No. 2021104874438, filed with the China National Intellectual Property Administration on April 30, 2021 and entitled "PAGING METHOD, COMMUNICATION APPARATUS, AND SYSTEM", which is incorporated herein by reference in its entirety.

### TECHNICAL FIELD

This application relates to the field of communication technologies, and in particular, to a paging method, a communication apparatus, and a system.

### BACKGROUND

When user equipment (user equipment, UE) in a new radio (new radio, NR) access technology is in a radio resource control (radio resource control, RRC) idle (idle) state, a paging message is usually received in a discontinuous reception (discontinuous reception, DRX) manner, in other words, the UE in the RRC idle state and using DRX is woken up on a specific paging (paging) occasion within each paging cycle (which is also referred to as a DRX cycle), to monitor a physical downlink control channel (physical downlink control channel, PDCCH) scrambled by a paging radio network temporary identifier (paging radio network temporary identifier, P-RNTI). During other periods of time, the UE may remain in a sleep state and stop receiving paging. In other words, the LTE in the RRC idle state and using the DRX may be woken up intermittently to monitor the PDCCH scrambled by the P-RNTI. However, when the UE is frequently woken up in such a manner to enable the UE to monitor the PDCCH scrambled by the P-RNTI, power consumption of the LTE increases. In addition, because the LTE is woken up only on a paging occasion within a paging cycle of a specific period of time to monitor paging, and remains in the sleep state and stops paging during the other periods of time, real-time performance of receiving some specific downlink services by the UE is affected.

### SUMMARY

This application provides a paging method, a communication apparatus, and a system, to facilitate improving flexibility of receiving a paging message by a terminal device. Based on a specific application scenario, the terminal device may receive a signal with lower power consumption during demodulation from a network device, to reduce power consumption of the terminal device.

According to a first aspect, this application provides a paging method. The method may be applied to a terminal device, or may be applied to a component (a chip, a processor, or the like) of a terminal device. An example in which the method is applied to the terminal device is used. The method includes: sending first information to a first network device, where the first information includes a signal coverage level of the terminal device and whether the terminal device has a capability of receiving a first signal; receiving second information from the first network device, where the second information indicates the terminal device to receive the first signal or a second signal, the first signal is used to page or wake up the terminal device, the second signal is used to page the terminal device or indicates whether the terminal device receives paging, formats of the first signal and the second signal are different, and the formats include at least one of the following: coding, modulation, and multiple access; and receiving, from the first network device, a signal indicated by the second information.

According to the method described in the first aspect, the terminal device may flexibly receive, via signals in different formats, paging and the like sent by a network device. Further, based on this architecture, the network device may configure the formats of the first signal and the second signal, so that paging on the terminal device can balance an energy-saving effect of LTE and a paging success rate to some extent. For example, the network device may configure the formats of the first signal and the second signal to be that power consumption of receiving the first signal is less than power consumption of receiving the second signal, but a coverage area of the first signal is less than a coverage area of the second signal. In this way, when the terminal device cannot receive the first signal, the terminal device receives, via the second signal, the paging sent by the network device, to ensure that the network device can successfully page the terminal device, to increase the paging success rate. When the terminal device may receive the first signal, the terminal device demodulates the first signal to wake up the terminal device in time to receive paging, to improve the energy-saving effect of the UE.

According to a second aspect, this application provides a paging method. The method may be applied to a terminal device, or may be applied to a component (a chip, a processor, or the like) of a terminal device. An example in which the method is applied to the terminal device is used. The method includes: determining, based on first information, that the terminal device receives a first signal or a second signal, where the first information includes a signal coverage level of the terminal device and whether the terminal device has a capability of receiving the first signal, the first signal is used to page or wake up the terminal device, the second signal is used to page the terminal device or indicates whether the terminal device receives paging, formats of the first signal and the second signal are different, and the formats include at least one of the following: coding, modulation, and multiple access; and receiving a determined signal from a first network device. For beneficial effects of this method, refer to beneficial effects of the first aspect. Repeated content is not described again.

According to a third aspect, this application provides a paging method. The method may be applied to a first network device, or may be applied to a component (a chip, a processor, or the like) of a first network device. An example in which the method is applied to the first network device is used. The method includes: receiving first information from a terminal device, where the first information includes a signal coverage level of the terminal device and whether the terminal device has a capability of receiving a first signal; sending second information to the terminal device, where the second information indicates the terminal device to receive the first signal or a second signal, the first signal is used to page or wake up the terminal device, the second signal is used to page the terminal device or indicates whether the terminal device receives paging, formats of the first signal and the second signal are different, and the formats include at least one of the following: coding, modulation, and multiple access; and sending, to the terminal device, a signal indicated by the second information. For beneficial effects of this method, refer to beneficial effects of the first aspect. Repeated content is not described again.

According to a fourth aspect, this application provides a paging method. The method may be applied to a first network device, or may be applied to a component (a chip, a processor, or the like) of a first network device. An example in which the method is applied to the first network device is used. The method includes: receiving first information from a terminal device, where the first information includes a signal coverage level of the terminal device and whether the terminal device has a capability of receiving a first signal; receiving second information from a second network device, where the second information indicates the terminal device to receive the first signal or a second signal, the first signal is used to page or wake up the terminal device, the second signal is used to page the terminal device or indicates whether the terminal device receives paging, formats of the first signal and the second signal are different, and the formats include at least one of the following: coding, modulation, and multiple access; and sending, to the terminal device, a signal indicated by the second information. For beneficial effects of this method, refer to beneficial effects of the first aspect. Repeated content is not described again.

According to a fifth aspect, this application provides a paging method. The method may be applied to a second network device, or may be applied to a component (a chip, a processor, or the like) of a second network device. An example in which the method is applied to the second network device is used. The method includes: receiving first information from a first network device, where the first information includes a signal coverage level of a terminal device and whether the terminal device has a capability of receiving a first signal; determining, based on the first information, that the terminal device receives the first signal or a second signal, where the first signal is used to page or wake up the terminal device, the second signal is used to page the terminal device or indicates whether the terminal device receives paging, formats of the first signal and the second signal are different, and the formats include at least one of the following: coding, modulation, and multiple access; and sending second information to the first network device, where the second information indicates the terminal device to receive the first signal or the second signal. For beneficial effects of this method, refer to beneficial effects of the first aspect. Repeated content is not described again.

According to the method in the first aspect, the second aspect, the third aspect, the fourth aspect, or the fifth aspect, the method further includes the following possible implementations.

In a possible implementation, if the signal coverage level of the terminal device is greater than or equal to a first threshold, and the terminal device has the capability of receiving the first signal, it is determined that the terminal device receives the first signal.

In a possible implementation, the first information further includes an energy-saving level of the terminal device. If the signal coverage level of the terminal device is greater than or equal to the first threshold, the energy-saving level of the terminal device is greater than or equal to a second threshold, and the terminal device has the capability of receiving the first signal, determining that the terminal device receives the first signal. According to this possible implementation, the energy-saving level of the terminal device is taken as an element considered when the terminal device, is paged, so that flexibility of paging the terminal device can be improved.

In a possible implementation, when the first signal is used to page the terminal device, the first signal indicates the terminal device to establish or resume a radio resource control connection; or when the first signal is used to wake up the terminal device, the first signal indicates the terminal device to receive paging via the second signal, where the paging indicates the terminal device to establish or resume a radio resource control connection.

In a possible implementation, when the second signal is used to page the terminal device, the second signal indicates whether the terminal device establishes or resumes the radio resource control connection; or when the second signal indicates whether the terminal device receives paging, the second signal indicates whether the terminal device receives paging on at least one paging occasion, where the paging indicates whether the terminal device establishes or resumes the radio resource control connection.

In a possible implementation, power consumption of receiving the first signal by the terminal device is less than power consumption of receiving the second signal by the terminal device.

In a possible implementation, the terminal device has a first circuit and a second circuit, the first signal is a signal received by the terminal device by using the first circuit, and the second signal is a signal received by the terminal device by using the second circuit.

In a possible implementation, when the first signal is used to page the terminal device, the first signal is used to wake up the first circuit and the second circuit, and indicates the terminal device to establish or resume the radio resource control connection; or when the first signal is used to wake up the terminal device, the first signal is used to wake up the first circuit and the second circuit, and indicates the terminal device to receive paging by using the second circuit, where the paging indicates the terminal device to establish or resume the radio resource control connection.

In a possible implementation, when the second signal is used to page the terminal device, the second signal is used to wake up the second circuit, and indicates whether the terminal device establishes or resumes the radio resource control connection; or
when the second signal indicates whether the terminal device receives paging, the second signal is used to wake up the second circuit, and indicates whether the terminal device receives paging on at least one paging occasion, where the paging indicates whether the terminal device establishes or resumes the radio resource control connection.

In a possible implementation, the first information is sent when the terminal device is attached or when a tracking area is updated.

According to a sixth aspect, this application provides a communication apparatus. The apparatus may be an apparatus in a terminal device, or an apparatus that can be used together with a terminal device. The communication apparatus may alternatively be a chip system. The communication apparatus may perform the method in the first aspect. A function of the communication apparatus may be implemented by hardware, or may be implemented by hardware executing corresponding software. The hardware or the software includes one or more units corresponding to the function. The one or more units may be the software and/or the hardware. For operations performed by the communication apparatus, and beneficial effects thereof, refer to the method in the first aspect or the second aspect, and beneficial effects thereof. Repeated content is not described again.

According to a seventh aspect, this application provides a communication apparatus. The apparatus may be an apparatus in a first network device, or an apparatus that can be used together with a first network device. The communication apparatus may alternatively be a chip system. The communication apparatus may perform the method in the third aspect. A function of the communication apparatus may be implemented by hardware, or may be implemented by hardware executing corresponding software. The hardware or the software includes one or more units corresponding to the function. The one or more units may be the software and/or the hardware. For operations performed by the communication apparatus, and beneficial effects thereof, refer to the method in the third aspect or the fourth aspect, and beneficial effects thereof. Repeated content is not described again.

According to an eighth aspect, this application provides a communication apparatus. The apparatus may be an apparatus in a second network device, or an apparatus that can be used together with a second network device. The communication apparatus may alternatively be a chip system. The communication apparatus may perform the method in the fourth aspect. A function of the communication apparatus may be implemented by hardware, or may be implemented by hardware executing corresponding software. The hardware or the software includes one or more units corresponding to the function. The one or more units may be the software and/or the hardware. For operations performed by the communication apparatus, and beneficial effects thereof, refer to the method in the fifth aspect, and beneficial effects thereof. Repeated content is not described again.

According to a ninth aspect, this application provides a communication apparatus. The communication apparatus may be the terminal device in the foregoing method embodiments, or a chip disposed in a terminal device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the terminal device in the foregoing method embodiments.

According to a tenth aspect, this application provides a communication apparatus. The communication apparatus may be the first network device in the foregoing method embodiments, or a chip disposed in a first network device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the first network device in the foregoing method embodiments.

According to an eleventh aspect, this application provides a communication apparatus. The communication apparatus may be the second network device in the foregoing method embodiments, or a chip disposed in a second network device. The communication apparatus includes a communication interface and a processor, and optionally, further includes a memory. The memory is configured to store a computer program or instructions. The processor is coupled to the memory and the communication interface. When the processor executes the computer program or the instructions, the communication apparatus is enabled to perform the method performed by the second network device in the foregoing method embodiments.

According to a twelfth aspect, this application provides a computer-readable storage medium. The computer-readable storage medium is configured to store computer-executable instructions. When the computer-executable instructions are executed, the method performed by the terminal device according to the method in the first aspect or the second aspect is implemented.

According to a thirteenth aspect, this application provides a computer-readable storage medium. The computer-readable storage medium is configured to store computer-executable instructions. When the computer-executable instructions are executed, the method performed by the first network device according to the method in the third aspect or the fourth aspect is implemented.

According to a fourteenth aspect, this application provides a computer-readable storage medium. The computer-readable storage medium is configured to store computer-executable instructions. When the computer-executable instructions are executed, the method performed by the second network device according to the method in the fifth aspect is implemented.

According to a fifteenth aspect, this application provides a computer program product including a computer program. When the computer program is executed, the method performed by the terminal device according to the method in the first aspect, the second aspect, the third aspect, the fourth aspect, or the fifth aspect is implemented.

According to a sixteenth aspect, this application provides a communication system. The communication system includes the communication apparatuses in the sixth aspect, the seventh aspect, and the eighth aspect, the communication apparatuses in the seventh aspect and the eighth aspect, the communication apparatuses in the ninth aspect, the tenth aspect, and the eleventh aspect, or the communication apparatuses in the tenth aspect and the eleventh aspect.

### BRIEF DESCRIPTION OF DRAWINGS

FIG. 1 is a schematic diagram of an architecture of a paging system according to an embodiment of this application;
FIG. 2 is a schematic diagram of a PO of a terminal device according to an embodiment of this application;
FIG. 3 is a schematic flowchart of a paging method according to an embodiment of this application;
FIG. 4 is a schematic diagram of signal coverage level classification according to an embodiment of this application;
FIG. 5 is a schematic diagram of a PO of another terminal device according to an embodiment of this application;
FIG. 6 is a schematic flowchart of another paging method according to an embodiment of this application;
FIG. 7 is a schematic diagram of a structure of a communication apparatus according to an embodiment of this application; and
FIG. 8 is a schematic diagram of a structure of another communication apparatus according to an embodiment of this application.

### DESCRIPTION OF EMBODIMENTS

To make the objectives, technical solutions, and advantages of this application clearer, the following further describes this application in detail with reference to the accompanying drawings.

In the specification, the claims, and the accompanying drawings of this application, the terms "first", "second", and the like are intended to distinguish between different objects but do not indicate a particular order. In addition, the terms "including", "having" and any other variants thereof are intended to cover a non-exclusive inclusion. For example, a process, a method, a system, a product, or a device that includes a series of operations or units is not limited to the listed operations or units, but optionally further includes an unlisted operation or unit, or optionally further includes another inherent operation or unit of the process, the method, the product, or the device.

An "embodiment" mentioned in this specification means that a particular feature, structure, or characteristic described with reference to this embodiment may be included in at least one embodiment of this application. The phrase shown in various locations in this specification may not necessarily refer to a same embodiment, and is not an independent or optional embodiment exclusive from another embodiment. It is explicitly and implicitly understood by a person skilled in the art that embodiments described in this specification may be combined with another embodiment.

In this application, "at least one (item)" means one or more, "a plurality of" means two or more, "at least two (items)" means two, three, or more, and "and/or" is used to describe a correspondence relationship between corresponding objects, and indicates that there may be three relationships. For example, "A and/or B" may indicate that only A exists, only B exists, and both A and B exist, where A and B may be singular or plural. The character "/" usually represents an "or" relationship between the corresponding objects. "At least one of the following items (pieces)" or a similar expression thereof indicates any combination of these items, including a single item (piece) or any combination of a plurality of items (pieces). For example, at least one (piece) of a, b, or c may represent a, b, c, a and b, a and c, b and c, or a, b, and c, where a, b, or c may be singular or plural.

To better understand the solutions provided in this application, the following first describes an architecture of a system in this application.

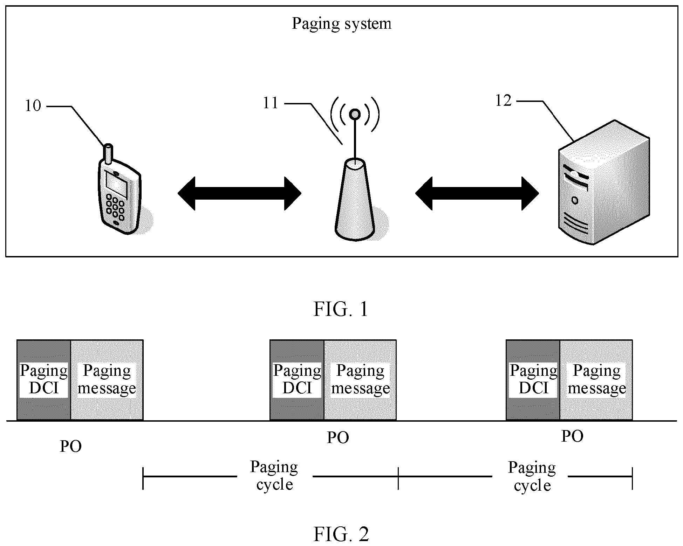

FIG. 1 is a schematic diagram of an architecture of a paging system according to an embodiment of this application. As shown in FIG. 1, the architecture of the system includes a terminal device (that is, a terminal device 10 in FIG. 1) and a network device. The network device includes an access network device (that is, a network device 11 in FIG. 1) and a core network device (that is, a network device 12 in FIG. 1). It should be known that a quantity of terminal devices is merely an example, and the quantity of terminal devices is not specifically limited in this embodiment of this application.

The following separately describes in detail the terminal device and the network device in FIG. 1.

### 1. Terminal device

The terminal device may also be referred to as user equipment (user equipment, UE), and includes a device that provides a user with a voice and/or data connectivity, for example, may include a handheld device with a wireless connection function, or a processing device connected to a wireless modem. The terminal device may communicate with a core network via a radio access network (radio access network, RAN), and exchange a voice and/or data with the RAN. The terminal device may include a wireless terminal device, a mobile terminal device, a device-to-device (device-to-device, D2D) communication terminal device, a vehicle-to-everything (vehicle-to-everything, V2X) terminal device, a machine-to-machine/machine-type communication (machine-to-machine/machine-type communication, M2M/MTC) terminal device, an internet of things (internet of things, IoT) terminal device, a subscriber unit, a subscriber station, a mobile station, a remote station, an access point (access point, AP), a remote terminal, an access terminal, a user terminal, a user agent, user equipment, or the like. For example, the terminal device may include a mobile phone (or referred to as a "cellular" phone), a computer with the mobile terminal device, or a portable, pocket-sized, handheld, or computer built-in mobile apparatus, or a device such as a personal communication service (personal communication service, PCS) phone, a cordless phone, a session initiation protocol (session initiation protocol, SIP) phone set, a wireless local loop (wireless local loop, WLL) station, or a personal digital assistant (personal digital assistant, PDA). The terminal device may alternatively include a limited device, for example, a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner.

### 2. Access network device

The access network device is a node or a device that connects a terminal device to a wireless network. The access network device includes, for example, but is not limited to, a new generation NodeB (generation NodeB, gNB), an evolved NodeB (evolved NodeB, eNB), a next generation evolved NodeB (next generation eNB, ng-eNB), a wireless backhaul device, a radio network controller (radio network controller, RNC), a NodeB (NodeB, NB), a base station controller (base station controller, BSC), a base transceiver station (base transceiver station, BTS), a home NodeB (home evolved NodeB (HeNB) or home NodeB (HNB)), a baseband unit (baseband unit, BBU), a transmission reception point (transmission reception point, TRP), a transmitting point (transmitting point, TP), and a mobile switching center in a 5G communication system.

### 3. Core network device

The core network (core network, CN) may include one or more CN devices. A 5G communication system is used as an example. The CN may include an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an application function (application function, AF) network element, and the like.

The AMF network element is a control plane network element provided by a carrier network, and is responsible for access control and mobility management for accessing the carrier network by a terminal device, for example, including functions such as mobility status management, allocation of a temporary user identifier, and user authentication and authorization.

The SMF network element is a control plane network element provided by the carrier network, and is responsible for managing a protocol data unit (protocol data unit, PDU) session of the terminal device. The PDU session is a channel for transmitting a PDU, and the terminal device needs to transmit the PDU to a DN through the PDU session. The SMF network element is responsible for establishment, maintenance, deletion, and the like of the PDU session. The SMF network element includes functions related to a session, for example, session management (for example, session establishment, modification, and release, including tunnel maintenance between a UPF and a RAN), selection and control of the UPF network element, service and session continuity (service and session continuity, SSC) mode selection, and roaming.

The UPF network element is a gateway provided by a carrier, and is a gateway for communication between the carrier network and the DN. The UPF network element includes functions related to a user plane, for example, data packet routing and transmission, packet detection, quality of service (quality of service, QoS) processing, lawful interception, uplink packet detection, and downlink data packet storage.

The PCF network element is a control plane function provided by the carrier, and is configured to provide a policy of the PDU session for the SMF network element. The policy may include a charging-related policy, a QoS-related policy, an authorization-related policy, and the like.

The AF network element is a function network element that provides various capability exposure services, provides an interface for an external third-party server to interact with the core network and can interact with the core network through the AF network element, including interacting with a policy management framework for policy management.

In addition, the CN may further include another possible network element, for example, a network exposure function (network exposure function, NEF) network element, a unified data repository (unified data repository, UDR) network element, and a network data analytics function (network data analytics function, NWDAF) network element.

It should be noted that in this application, the access network device and the core network device are collectively referred to as a network device, where the access network device is also referred to as a first network device, and the core network device is also referred to as a second network device.

It may be understood that the 5G communication system is used as an example for illustration in FIG. 1. The solutions in embodiments of this application are further applicable to another possible communication system, for example, an LTE communication system or a future 6th generation (6th generation, 6G) communication system. The foregoing network elements or functions may be network elements in a hardware device, may be software functions run on special-purpose hardware, or may be instantiated virtualization functions on a platform (for example, a cloud platform). Optionally, the foregoing network elements or the functions may be implemented by one device, may be jointly implemented by a plurality of devices, or may be one functional module in one device. This is not specifically limited in embodiments of this application.

The following further describes related technical features in embodiments of this application. It should be noted that these explanations are intended to facilitate understanding of embodiments of this application, but should not be considered as a limitation on the protection scope claimed in this application.

### 1. Radio resource control (radio resource control, RRC)

The RRC is to manage, control, and schedule radio resources by using specific policies and means. In a case of meeting requirements of service quality, limited radio network resources are fully utilized to ensure that a planned coverage area is reached, and service capacity and resource usage are improved as much as possible. In a communication system, when data transmission needs to be performed between a terminal device and an access network device (for example, a base station), an RRC connection needs to be first established between the terminal device and the access network device, and then the data transmission can be performed between the terminal device and the access network device. Further, in the communication system, two RRC states are defined for the terminal device: an RRC connected (RRC connected) state and an RRC idle (RRC idle) state.

RRC connected (RRC Connected) state: When being in the RRC connected state, the terminal device may perform data transmission with the access network device.

RRC idle (RRC Idle) state: When being in the RRC idle state, the terminal device cannot perform data transmission with the access network device, but may perform cell reselection, detect a paging message sent by the access network device, and the like. It should be known that the RRC idle state mentioned in this application may also be understood as an RRC non-connected state in some communication systems. This is not excessively limited in this application.

### 2. Paging (paging)

A paging technology is an important technology in wireless communication system. A network device (which may alternatively be understood as a collective name of an access network device and a core network device) may find a terminal device through paging, and initiate a service for the terminal device. When the terminal device is in an RRC idle state (or referred to as an RRC non-connected state), the network device knows only a tracking area (tracking area, TA) in which the terminal device is located. Therefore, when needing to search for one terminal device, the network device needs to first check a TA to which the terminal device belongs, and then send a paging message to all cells in the TA. A paging process may be understood as a process of establishing or resuming an RRC connection between the terminal device and the network device.

### 3. Paging occasion (paging occasion, PO)

A location of paging downlink control information (downlink control information, DCI) and/or a location of a paging message is/are referred to as a PO and/or POs. FIG. 2 is a schematic diagram of a PO of a terminal device. As shown in FIG. 2, one paging occasion includes a location of paging DCI and a time domain location of a paging message. The terminal device may calculate a PO corresponding to the terminal device based on related parameters (for example, identifier number information of the terminal device and a paging-related parameter provided by a system message), to receive the paging DCI and the paging message on a corresponding PO.

The paging DCI is used to schedule the paging message, in other words, the paging DCI indicates a time-frequency resource of the paging message. After receiving the paging DCI, the terminal device may receive the paging message based on the time-frequency resource of the paging message indicated by the paging DCI. The paging message is carried on a paging physical downlink shared channel (paging physical downlink shared channel, paging PDSCH), and is used to page the terminal device. The paging message includes an identifier of a paged terminal device. In other words, if an identifier of a specific terminal device is included in the paging message, it indicates that the terminal device is paged by a network device.

### 4. Paging cycle

To reduce power consumption of a terminal device, a terminal device in a non-connected state periodically receives a paging message. The paging cycle refers to a cycle during which a paging occasion occurs. As shown in FIG. 2, for one terminal device, each paging cycle includes one PO. The paging cycle may also be referred to as a discontinuous reception (discontinuous reception, DRX) cycle. For one terminal device, a radio resource control (radio resource control, RRC) layer or a higher layer may configure a terminal device-specific paging cycle for the terminal device, and a network device broadcasts a default paging cycle (which may also be referred to as a cell-specific paging cycle). When being configured with the terminal-specific paging cycle, the terminal device receives paging in the terminal device-specific paging cycle; otherwise the terminal device receives paging in the default paging cycle (that is, the cell-specific paging cycle).

The following further describes in detail a paging method provided in embodiments of this application.

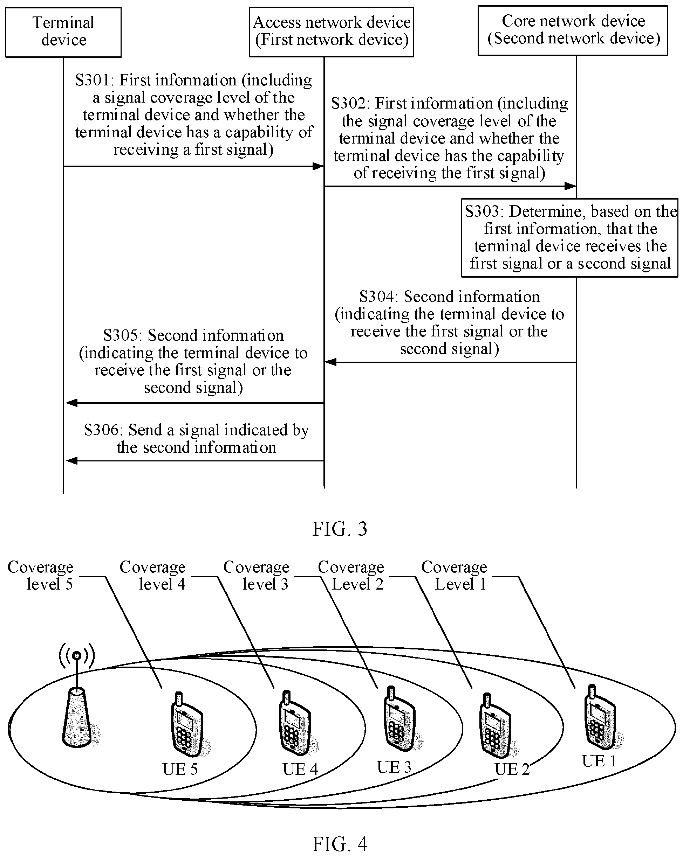

FIG. 3 is a schematic flowchart of a paging method according to an embodiment of this application. As shown in FIG. 3, the paging method includes the following S301 to S303. The method shown in FIG. 3 may be executed by a terminal device, a first network device (an access network device), and a second network device (a core network device), or may be executed by a chip in a terminal device, a chip in a first network device (an access network device), and a chip in a second network device (a core network device). In FIG. 3, an example in which the method is executed by the terminal device, the first network device (the access network device), and the second network device (the core network device) is used for description. In addition, processing performed by a single execution body shown in FIG. 3 may also be performed by a plurality of execution bodies that are logically and/or physically separated, for example, processing performed by the access network device may be performed by at least one of a central unit (central unit, CU), a distributed unit (distributed unit, DU), and a radio unit (radio unit, RU).

S301: The terminal device sends first information to the access network device.

The first information includes a signal coverage level of the terminal device and whether the terminal device has a capability of receiving a first signal. It should be understood that the signal coverage level is classified based on a case in which the terminal device receives the first signal. Specifically, the signal coverage level may be classified based on a signal power of the first signal received by the terminal device, or based on a distance (which may be understood as a coverage range of the first signal sent by the access network device) between the terminal device and the access network device, or a corresponding coverage level may be obtained based on a reference signal received power (reference signal received power, RSRP) of the first signal measured and received by a terminal. The signal coverage level of the terminal device in this application may be approximately understood as a case in which the first signal is received at a location of the terminal device. For example, FIG. 4 is a schematic diagram of signal coverage level classification. Signal coverage levels in descending order are as follows: a signal coverage level 5, a signal coverage level 4, a signal coverage level 3, a signal coverage level 2, and a signal coverage level 1. In this case, signal coverage levels of the terminal devices in descending order are as follows: LTE 5, UE 4, UE 3, UE 2, and UE 1.

It should be learned that "the signal coverage level of the terminal device" and "whether the terminal device has the capability of receiving the first signal" may exist in a same first information, or may exist in different first information. This is not specifically limited in this application.

For example, in example 1, "the signal coverage level of the terminal device" and "whether the terminal device has the capability of receiving the first signal" exist in the same first information. In this case, it may be understood as that the terminal device simultaneously sends "the signal coverage level of the terminal device" and "whether the terminal device has the capability of receiving the first signal" to the access network device. In example 2, "the signal coverage level of the terminal device" and "whether the terminal device has the capability of receiving the first signal" exist in different first information. In this case, after sending the first information "the signal coverage level of the terminal device" to the access network device, the terminal device may send the first information "whether the terminal device has the capability of receiving the first signal" to the access network device. Alternatively, after sending the first information "whether the terminal device has the capability of receiving the first signal" to the access network device, the terminal device may send the first information "the signal coverage level of the terminal device" to the access network device. A time sequence of sending "the signal coverage level of the terminal device" and "whether the terminal device has the capability of receiving the first signal" by the terminal device to the access network device is not specifically limited in this application.

For ease of understanding this solution, the following separately illustrates a sending manner of "the signal coverage level of the terminal device" and a sending manner of "whether the terminal device has the capability of receiving the first signal".

### 1. The sending manner of "whether the terminal device has the capability of receiving the first signal"

Specifically, the first information includes a message field indicating "whether the terminal device has the capability of receiving the first signal", and a value of the message field indicates whether the terminal device has the capability of receiving the first signal.

For example, a value of a message field A in the first information includes "0" or "1 ", and indicates whether the terminal device has the capability of receiving the first signal. The value of the message field A being "0" indicates that the terminal device does not have the capability of receiving the first signal. The value of the message field A being "1" indicates that the terminal device has the capability of receiving the first signal.

### 2. The sending manner of "the signal coverage level of the terminal device" is as follows: a direct sending manner and an indirect sending manner

### Scenario 1: Direct sending manner

In this scenario, the first information includes a message field indicating "the signal coverage level of the terminal device", and a value of the message field is a value of the signal coverage level of the terminal device.

For example, a value of a message field B in the first information includes "5", "4", "3", "2", and "1 ", and the value of the message field B is the value of the signal coverage level of the terminal device. It may be understood as that when the value of the message field B is "5", the first information indicates that the signal coverage level of the terminal device is a level 5. When the value of the message field B is "4", the first information indicates that the signal coverage level of the terminal device is a level 4. It should be known that a larger value of the message field B indicates a higher signal coverage level of the terminal device, or a larger value of the message field B indicates a lower signal coverage level of the terminal device. This is not specifically limited in this application.

### Scenario 2: Indirect sending manner

In this case, it may be understood as that the terminal device sends the first information to the access network device, where the first information indirectly indicates (or understood as reflecting) the signal coverage level of the terminal device. The first information includes but is not limited to one or more of the following information: an index value, a distance between the terminal device and the access network device, and a measurement of a reference signal received power (reference signal received power, RSRP).

In example 1, the first information sent by the terminal device to the access network device includes the index value, and the index value is in a one-to-one correspondence with the signal coverage level in Table 1. In this case, when the first information sent by the terminal device to the access network device includes an index value 0, the first information indicates that the signal coverage level of the terminal device is a level 3.

**Table 1**

| Index value | Signal coverage level |
|---|---|
| 0 | Level 3 |
| 1 | Level 2 |
| 2 | Level 1 |

In example 2, there is a correspondence between the distance between the terminal device and the access network device, and the signal coverage level, as shown in Table 2. In this case, when the first information sent by the terminal device to the access network device includes that the distance between the terminal device and the access network device is 40 meters, the first information indicates that the signal coverage level of the terminal device is a level 3.

**Table 2**

| Distance (m) | Signal coverage level |
|---|---|
| [0, 50] | Level 3 |
| (50, 100] | Level 2 |
| (100, 200] | Level 1 |

In example 3, as shown in Table 3, there is a correspondence between the RSRP and the signal coverage level. In this case, when the first information sent by the terminal device to the access network device includes that an RSRP value is -85 dB, the first information indicates that the signal coverage level of the terminal device is a level 4.

**Table 3**

| Distance (dB) | Signal coverage level |
|---|---|
| Greater than -95 dB | Level 4 |
| (-105, -95] | Level 3 |
| (-115, -105] | Level 2 |
| Less than -115 dB | Level 1 |

In a possible implementation, the first information is sent when the terminal device is attached (attached) or a tracking area (tracking area, TA) is updated. It may be understood that when the terminal device is initially powered on, or when the terminal device performs cell switching (switches from an original cell to a target cell), the terminal device sends the first information to the access network device.

S302: The core network device receives the first information from the access network device.

After receiving the first information sent by the terminal device, the access network device sends the signal coverage level of the terminal device and whether the terminal device has the capability of receiving the first signal that are included in the first information to the core network device according to a communication protocol between the access network device and the core network device.

In an application scenario, the core network device further receives, from the access network device, information indicating a type of the access network device. Further, the core network device may determine, based on the first information and the type of the access network device, that the terminal device receives the first signal or a second signal. The type of the access network device includes but is not limited to one of a micro base station, a pole site, and a small base station. It may be understood that when the type of the access network device is one of the micro base station, the pole site, and the small base station, it may be considered that signal coverage levels of all terminal devices that communicate with the access network device are greater than a first threshold.

In other words, the first information sent by the terminal device to the access network device includes "the coverage level of the terminal device" and "whether the terminal device has the capability of receiving the first signal". The first information sent by the access network device to the core network device includes "the coverage level of the terminal device", "whether the terminal device has the capability of receiving the first signal", and "the type of the access network device". Further, the core network device may determine, based on the "the coverage level of the terminal device", "whether the terminal device has the capability of receiving the first signal", and "the type of the access network device", that the terminal device receives the first signal or the second signal.

If the type of the access network device is one of the micro base station, the pole site, and the small base station, the core network device may determine, based on a case whether the terminal device has the capability of receiving the first signal, that the terminal device receives the first signal or the second signal. In other words, in this scenario, if the terminal device has the capability of receiving the first signal, the core network device determines that the terminal device receives the first signal; or if the terminal device does not have the capability of receiving the first signal, the core network device determines that the terminal device receives the second signal.

S303: The core network device determines, based on the first information, that the terminal device receives the first signal or the second signal.

In other words, the core network device determines, based on the first information, to send the first signal or the second signal to the terminal device.

For ease of understanding, the first signal and the second signal are first described in detail herein.
1. The first signal is used to page or wake up the terminal device.

When being used to page the terminal device, the first signal indicates the terminal device to establish or resume a radio resource control connection. In this case, it may be understood as that the first signal carries a signal for waking up the terminal device and a paging message sent by a network device, where the paging message may include an identifier for paging the terminal device. After receiving the first signal, the terminal device immediately establishes or resumes the radio resource control connection to the network device based on the paging message, to subsequently receive data delivered by the network device.

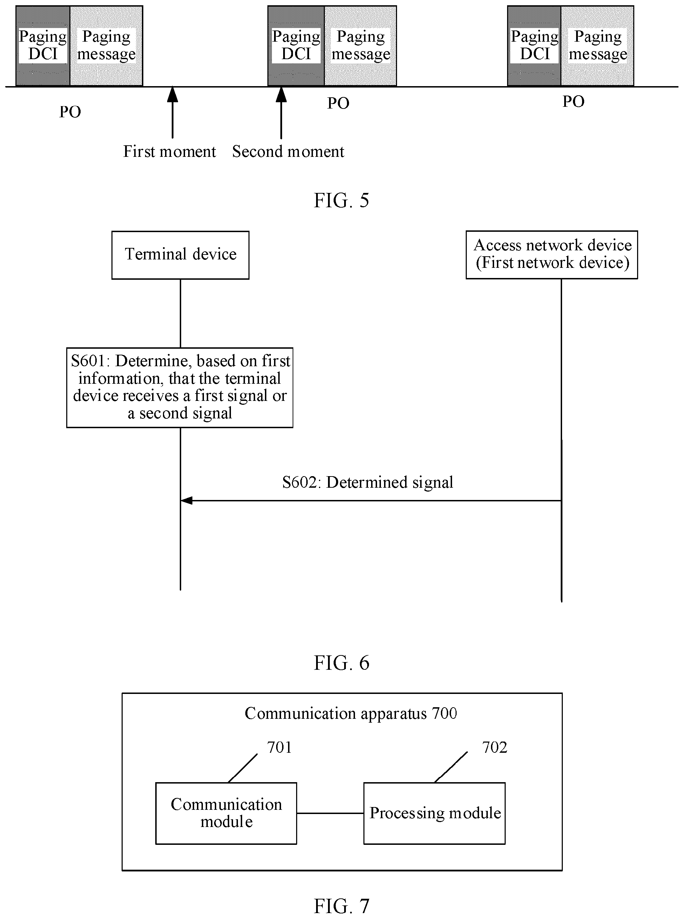

When being used to wake up the terminal device, the first signal indicates the terminal device to receive paging via the second signal, where the paging indicates the terminal device to establish or resume the radio resource control connection. In this case, it may be considered that the first signal is an auxiliary signal of the second signal, and the first signal is used to wake up the terminal device, so that after being woken up, the terminal device receives, by using a format of the second signal, the paging message sent by the network device. For example, the terminal device can receive the second signal only on each PO shown in FIG. 5. In this case, when the terminal device is in a sleep state, the network device sends the first signal to the terminal device at a first moment to wake up the terminal device, and receives the second signal on a predefined PO (for example, a first PO) (that is, a second moment shown in FIG. 5) after a moment at which the terminal device is woken up, where the second signal carries the paging message. Further, the terminal device may establish or resume the radio resource control connection to the network device based on the paging message, to subsequently receive the data delivered by the network device.

In an application scenario, the terminal device has a first circuit and a second circuit, the first signal is a signal received by the terminal device by using the first circuit, and the second signal is a signal received by the terminal device by using the second circuit.

In this application scenario, when the first signal is used to page the terminal device, the first signal is used to wake up the first circuit and the second circuit, and indicates the terminal device to establish or resume the RRC connection. It may be understood as that the second circuit is a circuit used to establish or resume the RRC connection to the network device. The terminal device receives the first signal, where the first signal includes information for waking up the first circuit. The first circuit of the terminal device is woken up, and the first signal further includes identifier information for paging the terminal device. If the identifier information matches identifier information of a current terminal device, the terminal device is woken up and indicated to establish or resume the RRC connection to the network device by using the second circuit.

In this application scenario, when the first signal is used to wake up the terminal device, the first signal is used to wake up the first circuit. For example, when a sequence sent by the first signal matches a sequence stored in the first circuit, the first circuit is woken up. Further, the first circuit wakes up the second circuit (in a short interval delay), and indicates the terminal device to receive paging by using the second circuit, where the paging indicates the terminal device to establish or resume the radio resource control connection. In this case, it may be considered that the first signal is the auxiliary signal of the second signal, and the first circuit is an auxiliary circuit of the second circuit. In other words, after receiving, by using the first circuit, the first signal sent by the network device, the terminal device wakes up the second circuit based on a circuit connection between the first circuit and the second circuit, so that the terminal device can receive paging by using the second circuit. For example, as shown in FIG. 5, the terminal device receives the paging message on each PO by using the second circuit. In this case, the network device sends the first signal to the terminal device at the first moment to wake up the first circuit of the terminal device, and wakes up the second circuit by using the circuit connection between the first circuit and the second circuit. After being woken up, the second circuit of the terminal device may receive paging on a first PO after the first moment (that is, the second moment shown in FIG. 5). Further, the terminal device may establish or resume the radio resource control connection to the network device based on the paging message, to subsequently receive the data delivered by the network device.

2. The second signal is used to page the terminal device.

When being used to page the terminal device, the second signal indicates whether the terminal device establishes or resumes a radio control connection. In this case, it may be understood as that the second signal carries a paging message. When the terminal device receives the second signal sent by a network device, it is determined that the terminal device receives the paging message. For example, the second signal carries paging DCI. The terminal device receives the second signal sent by the network device, and establishes or resumes the radio control connection to the network device based on the paging DCI in the second signal.

When indicating whether the terminal device receives paging, the second signal indicates whether the terminal device receives paging on at least one PO. In this case, it may be understood as that the terminal device receives the second signal at a first moment shown in FIG. 5, where the second signal is used to wake up the terminal device, so that the terminal device can receive paging on the at least one PO after the first moment.

In an application scenario, the terminal device has a first circuit and a second circuit, the first signal is a signal received by the terminal device by using the first circuit, and the second signal is a signal received by the terminal device by using the second circuit. The first circuit may be referred to as a paging auxiliary circuit or an auxiliary circuit, and the second circuit may be referred to as a paging primary circuit or a primary circuit.

In this application scenario, when being used to page the terminal device, the second signal is used to wake up the second circuit, and indicates whether the terminal device establishes or resumes the radio resource control connection. It may be understood as that the second signal carries the paging message. When the terminal device receives, by using the second circuit, the second signal sent by the network device, it is determined that the terminal device receives the paging message. Further, the terminal device establishes or resumes the radio control connection to the network device.

In this scenario, when the second signal indicates whether the terminal device receives paging, the second signal is used to wake up the second circuit, and indicates whether the terminal device receives paging on at least one paging occasion, where the paging indicates whether the terminal device establishes or resumes the radio resource control connection. For example, at the first moment shown in FIG. 5, the terminal device receives the second signal and wakes up the second circuit, so that the terminal device can receive paging on a PO after the first moment.

In conclusion, the first signal is used to page or wake up the terminal device, and the second signal is used to page the terminal device. Formats of the first signal and the second signal are different, and the formats include at least one of the following: coding, modulation, and multiple access. For example, the first signal may be a signal modulated through amplitude shift keying (amplitude shift keying, ASK) of the terminal device, a signal modulated through on-off keying (on-off keying, OOK), or a signal modulated through binary phase shift keying (binary phase shift keying, BPSK). The terminal device may detect the first signal in an envelope detection mode or a non-coherent demodulation mode. The second signal may be a signal modulated through BPSK, 16 QAM, or 64 QAM, and carries a PDCCH scrambled by a P-RNTI, and PDSCH information for paging the terminal device. The first signal may be a signal obtained without channel coding or with repeated coding, and the second signal may be a signal obtained through polarized (polarized) channel coding or low density parity check code (low density parity check code, LDPC) channel coding. The first signal may be an activation sequence with a special signal seeker or a good autocorrelation characteristic, for example, a ZC sequence, a Gold sequence, or a Barker sequence.

In a possible implementation, power consumption of receiving the first signal by the terminal device is less than power consumption of receiving the second signal by the terminal device. It may be understood that a format of the first signal is simpler than a format of the second signal, in other words, a process of demodulating the first signal by the terminal device is simpler than a process of demodulating the second signal by the terminal device. For example, a function of envelope detection is simpler, and power consumption is lower. Further, power consumption of receiving and demodulating the first signal by the terminal device is much less than power consumption of receiving and demodulating the second signal by the terminal device.

As described above, in an application scenario, the terminal device has the first circuit and the second circuit, the first signal is the signal received by the terminal device by using the first circuit, and the second signal is the signal received by the terminal device by using the second circuit. In this case, it may be understood as that a design of the first circuit is simpler than a design of the second circuit, and power consumption of receiving the first signal by the terminal device by using the first circuit is much less than power consumption of receiving the second signal by the terminal device by using the second circuit. For example, when being always woken up by using the second circuit and then receiving paging, the terminal device needs to be woken up on a specific PO within each paging cycle, to monitor the second signal. Frequently waking up the UE in such a manner causes an increase in power consumption of the UE. In addition, because the UE receives the second signal only on a specific PO by using the second circuit, and remains in the sleep state and stops paging in another period of time, real-time performance of a downlink service of the UE is affected. If being woken up by using the first circuit or selectively receiving the paging by using the first circuit, the terminal device may receive, by using the first circuit with a simpler design, the first signal sent by the network device. After receiving the first signal, the terminal device is woken up in time to receive paging. This avoids a case in which the UE is frequently woken up and improves an energy-saving effect of the terminal device.

The following describes in detail a manner in which the core network device determines, based on information in the first information, that the terminal device receives the first signal or the second signal.

Manner 1: Determine, based on "the signal coverage level of a terminal device" and "whether the terminal device has the capability of receiving the first signal" that are included in the first information, whether the signal coverage level of the terminal device is greater than or equal to the first threshold and whether the terminal device has the capability of receiving the first signal.

The first threshold is a preset signal coverage level, and may be adjusted based on a specific application scenario. This is not specifically limited in this application. The signal coverage level of the terminal device is greater than the first threshold. It may be understood as that the signal coverage level of the location of the terminal device is higher than the preset signal coverage level. In other words, a power of receiving the first signal by the terminal device is higher than a preset power (a power of receiving the first signal at the preset signal coverage level); the distance between the terminal device and the access network device is less than a preset distance (a distance between the terminal device and the access network device at the preset signal coverage level); or an RSRP value of the terminal device is greater than a preset RSRP value (an RSRP value of the terminal device at the preset signal coverage level). For example, the first signal is the signal received by the terminal device by using the first circuit, and the first threshold is related to a circuit type of the first circuit. The circuit type herein includes: an active circuit, a semi-active circuit, and a passive circuit. Corresponding to different types of first circuits, values of first thresholds may be different, coverage levels of UE 1, UE 2, and UE 3 are the same, but corresponding values of the first thresholds are different. The first thresholds for different circuit types in descending order may be: a first threshold of the active circuit < a first threshold of the semi-active circuit < a first threshold of the passive circuit.

In a possible implementation, if the signal coverage level of the terminal device is greater than or equal to the first threshold, and the terminal device has the capability of receiving the first signal, it is determined that the terminal device receives the first signal. On the contrary, if the signal coverage level of the terminal device is less than the first threshold, or the terminal device does not have the capability of receiving the first signal, it is determined that the terminal device receives the second signal.

For example, as shown in FIG. 4, a coverage area of the first signal is classified into five signal coverage levels based on the distance between the terminal device and the access network device: the coverage level 5, the coverage level 4, the coverage level 3, the coverage level 2, and the coverage level 1. In addition, the coverage level 5 is higher than the coverage level 4, the coverage level 3, the coverage level 2, and the coverage level 1. If the first threshold is the coverage level 3, terminal devices that have the capability of receiving the first signal include: the UE 2, the UE 4, and the UE 5, and terminal devices that do not have the capability of receiving the first signal include: the UE 1 and the UE 3. In this case, the UE 1 does not have the capability of receiving the first signal, and a signal coverage level of the UE 1 is the coverage level 1 less than the first threshold (the coverage level 3). Therefore, it is determined that the UE1 receives the second signal. The UE 2 has the capability of receiving the first signal, but a signal coverage level of the UE 2 is the coverage level 2 less than the first threshold (the coverage level 3). Therefore, it is determined that the UE 2 receives the second signal. A signal coverage level of the UE 3 is the coverage level 3 equal to the first threshold (the coverage level 3), but the UE 3 does not have the capability of receiving the first signal. Therefore, it is determined that the UE 3 receives the second signal. The UE 4 has the capability of receiving the first signal, and a signal coverage level of the UE 4 is the coverage level 4 greater than the first threshold (the coverage level 3). Therefore, it is determined that the UE 4 receives the first signal. The UE 5 has the capability of receiving the first signal, and a signal coverage level of the UE 5 is the coverage level 5 greater than the first threshold (the coverage level 3). Therefore, it is determined that the UE 5 receives the first signal.

Manner 2: The first information further includes an energy-saving level of the terminal device. The core network device determines, based on "the signal coverage level of the terminal device", "whether the terminal device has the capability of receiving the first signal", and "the energy-saving level of the terminal device" that are included in the first information, whether the signal coverage level of the terminal device is greater than or equal to the first threshold, whether the terminal device has the capability of receiving the first signal, and whether the energy-saving level of the terminal device is greater than or equal to a second threshold.

The second threshold is a preset energy-saving level of the terminal device, and may be subsequently adjusted based on a specific application scenario. This is not specifically limited in this application. The energy-saving level may be understood as an energy-saving requirement of a current terminal device. For example, when battery power of the terminal device is sufficient, the energy-saving requirement is low and may correspond to a low energy-saving level. When the battery power of the terminal device is insufficient, the terminal device needs to reduce power consumption, and the energy-saving requirement is high and may correspond to a high energy-saving level.

In a possible implementation, if the signal coverage level of the terminal device is greater than or equal to the first threshold, the energy-saving level of the terminal device is greater than or equal to the second threshold, and the terminal device has the capability of receiving the first signal, it is determined that the terminal device receives the first signal. On the contrary, if at least one of the following conditions is met: the signal coverage level of the terminal device is less than the first threshold, the energy-saving level of the terminal device is less than the second threshold, and the terminal device does not have the capability of receiving the first signal, it is determined that the terminal device receives the second signal.

For example, as shown in FIG. 4, the coverage area of the first signal is classified into five signal coverage levels based on the distance between the terminal device and the access network device: the coverage level 5, the coverage level 4, the coverage level 3, the coverage level 2, and the coverage level 1. In addition, the coverage level 5 is higher than the coverage level 4, the coverage level 3, the coverage level 2, and the coverage level 1. According to the energy-saving requirement of the terminal device, two energy-saving levels: an energy-saving level 2 and an energy-saving level 1 are classified for the terminal device, where the energy-saving level 2 is higher than the energy-saving level 1. In other words, when the energy-saving level of the terminal device is the energy-saving level 2, the energy-saving requirement is stronger than that of the terminal device whose energy-saving level is the energy-saving 1. If the first threshold is the coverage level 3, and the second threshold is the energy-saving level 2, terminal devices that have the capability of receiving the first signal include: the UE 2, the UE 4, and the UE 5, and terminal devices that do not have the capability of receiving the first signal include: the UE 1 and the UE 3. Terminal devices whose energy-saving level is the energy-saving level 1 include: the UE 1, the UE 3, and the UE 4, and terminal devices whose energy-saving level is the energy-saving level 2 include: the UE 2 and the UE 5.

In this case, the UE 1 does not have the capability of receiving the first signal, an energy-saving level of the UE 1 is the energy-saving level 1 less than the second threshold (the energy-saving level 2), and the signal coverage level of the UE 1 is the coverage level 1 less than the first threshold (the coverage level 3). Therefore, it is determined that the UE 1 receives the second signal. The LTE 2 has the capability of receiving the first signal, an energy-saving level of the UE 2 is the energy-saving level 2 equal to the second threshold (the energy-saving level 2), but the signal coverage level of the UE 2 is the coverage level 2 less than the first threshold (the coverage level 3). Therefore, it is determined that the UE 2 receives the second signal. The signal coverage level of the UE3 is the coverage level 3 equal to the first threshold (the coverage level 3), but an energy-saving level of the LTE 3 is the energy-saving level 1 less than the second threshold (the energy-saving level 2), and the UE 3 does not have the capability of receiving the first signal. Therefore, it is determined that the UE 3 receives the second signal. The UE 4 has the capability of receiving the first signal, and the signal coverage level of the UE 4 is the coverage level 4 greater than the first threshold (the coverage level 3), but an energy-saving level of the UE 4 is the energy-saving level 1 less than the second threshold (the energy-saving level 2). Therefore, it is determined that the UE 4 receives the second signal. The UE 5 has the capability of receiving the first signal, an energy-saving level of the UE 5 is the energy-saving level 1 equal to the second threshold (the energy-saving level 2), and the signal coverage level of the UE 5 is the coverage level 5 greater than the first threshold (the coverage level 3). Therefore, it is determined that the UE 5 receives the first signal.

Manner 3: The first information may further include but is not limited to one or more of the following: the RSRP value measured by the terminal device for receiving a signal, information about the distance between the terminal device and the access network device, and a demodulation threshold level value of the first circuit of the terminal device. In this case, the core network device determines the signal coverage level of the terminal device based on the first information including one or more of the following: the RSRP value measured by the terminal device for receiving the signal, the information about the distance between the terminal device and the access network device, and the demodulation threshold level value of the first circuit of the terminal device. Further, the core network device determines, based on "the signal coverage level of the terminal device" and "whether the terminal device has the capability of receiving the first signal" that are determined, that the terminal device receives the first signal or the second signal.

It may be understood as that the core network device verifies, based on "the RSRP value measured by the terminal device for receiving the signal", "the information about the distance between the terminal device and the access network device", and "the demodulation threshold level value of the first circuit of the terminal device" that are included in the first information, a signal coverage level in the first information reported by the terminal device, to improve data accuracy. Further, as described in manner 1, the core network device determines "the signal coverage level of the terminal device" and "whether the terminal device has the capability of receiving the first signal", and determines whether the signal coverage level of the terminal device is greater than or equal to the first threshold, and whether the terminal device has the capability of receiving the first signal. If the signal coverage level of the terminal device is greater than or equal to the first threshold, and the terminal device has the capability of receiving the first signal, it is determined that the terminal device receives the first signal.

S304: The core network device sends second information to the access network device.

The second information indicates the terminal device to receive the first signal or the second signal. It may alternatively be understood as that the second information indicates the access network device to send the first signal or the second signal to the terminal device.

For example, the core network device sends a message field C (that is, the second information) to the access network device. When a value of the message field C is a first value (for example, is 0), it indicates that the terminal device receives the first signal. When the value of the message field C is a second value (for example, is 1), it indicates that the terminal device receives the second signal.

For another example, the core network device sends a message field C (that is, the second information) to the access network device. When a value of the message field C is a first value (for example, is 0), it indicates that the terminal device receives the first signal. When the value of the message field C is a second value (for example, is 1), it indicates that the terminal device does not receive the first signal (in other words, it may be understood as receiving the second signal).

S305: The terminal device receives the second information from the access network device.

The second information indicates the terminal device to receive the first signal or the second signal, where the first signal is used to page or wake up the terminal device, and the second signal is used to page the terminal device or indicates whether the terminal device receives paging.

After receiving the second information sent by the core network device, the access network device sends the second information to the terminal device according to the communication protocol between the access network device and the terminal device, so that the terminal device knows that the access network device subsequently sends the first signal or the second signal to page the terminal device.

S306: The terminal device receives a signal indicated by the second information from the access network device.

When the signal indicated by the second information is the first signal, the access network device sends the first signal to the terminal device. When the signal indicated by the second information is the second signal, the access network device sends the second signal to the terminal device.

It can be seen that the coverage area of the first signal that is sent by the access network device and that is received by the terminal device is smaller than a coverage area of the second signal that is sent by the access device and that is received by the terminal device. By implementing the paging method described in FIG. 3, the terminal device may flexibly receive the paging message sent by the network device in a specific application scenario. When the terminal device cannot receive the first signal, the terminal device receives, via the second signal, the paging message sent by the network device, to ensure that the network device can successfully page the terminal device, to increase a paging success rate. When the terminal device may receive the first signal, the terminal device is woken up in time by demodulating the first signal with lower power consumption, to receive paging, and does not need to be periodically woken up to receive the paging message. In addition, the UE does not need to receive paging on a specific PO. This further improves the energy-saving effect of the terminal device.

FIG. 6 is a schematic flowchart of another paging method according to an embodiment of this application. As shown in FIG. 6, the paging method includes the following S601 to S603. The method shown in FIG. 6 may be executed by a terminal device, a first network device (an access network device), and a second network device (a core network device), or may be executed by a chip in a terminal device, a chip in a first network device (an access network device), and a chip in a second network device (a core network device). In FIG. 6, an example in which the method is executed by the terminal device, the first network device (the access network device), and the second network device (the core network device) is used for description. In addition, processing performed by a single execution body shown in FIG. 6 may also be performed by a plurality of execution bodies that are logically and/or physically separated, for example, processing performed by the access network device may be performed by at least one of a central unit (central unit, CU), a distributed unit (distributed unit, DU), and a radio unit (radio unit, RU).

S601: The terminal device determines, based on first information, that the terminal device receives a first signal or a second signal.

The first information includes a signal coverage level of the terminal device and whether the terminal device has a capability of receiving the first signal. The first signal is used to page or wake up the terminal device, and the second signal is used to page the terminal device or indicates whether the terminal device receives paging. Formats of the first signal and the second signal are different, and the formats include at least one of the following: coding, modulation, and multiple access.

For the first signal and the second signal, refer to specific descriptions of the first signal and the second signal in S303. Details are not described in this application again. For a specific manner of determining, based on the first information, that the terminal device receives the first signal or the second signal, refer to manner 1 and manner 2 of determining that the terminal device receives the first signal or the second signal in S303. Details are not described herein again. It should be noted that although an execution body in a specific implementation of S601 and an execution body in a specific implementation of S303 are different, principles of determining that the terminal device receives the first signal or the second signal are the same.

In an application scenario, after determining that the terminal device receives the first signal or the second signal, the terminal device sends second information to a network device, where the second information indicates the terminal device to receive the first signal or the second signal. Further, the network device may send, to the terminal device, a signal indicated by the second information. It may be understood as that after determining a signal (the first signal or the second signal) received by the terminal device, the terminal device sends the second information to the access network device, where the second information indicates the terminal device to receive the first signal or the second signal. Further, the access network device sends the second information to the core network device according to a communication protocol between the access network device and the core network device, so that when subsequently performing paging, the core network device may indicate the access network device to send, to the terminal device, the received signal (the first signal or the second signal) determined by the terminal device.

S602: The terminal device receives a determined signal from the access network device.

For a specific implementation of S602, refer to the foregoing specific implementation of S306. Details are not described herein again in this application.

In an application scenario, the terminal device sends the first information to the access network device, or sends the first information and the second information. Time for sending the first information may be before S601, or may be after S601. This is not specifically limited in this application. The access network device sends, to the core network device according to the communication protocol between the access network device and the core network device, information sent by the terminal device to the access network device. Further, the core network device determines, based on the first information, that the terminal device receives the first signal or the second signal. Specifically, the core network device determines, based on the first information and in a manner such as manner 1 and manner 2 in S303, that the terminal device receives the first signal or the second signal. Then, the access network device sends, to the terminal device, a signal determined by the core network device. In other words, in this application scenario, both the terminal device and the access network device need to determine, based on the first information, a signal received by the terminal device. Based on this application scenario, this application scenario is described in detail in the following two cases.

Case 1: The terminal device and the core network device determine, in a same manner, that the terminal device receives the first signal or the second signal.

In this case, it may be understood as that a result determined by the terminal device based on the first information (where the terminal device receives the first signal or the second signal) is the same as a result determined by the core network device based on the first information (where the terminal device receives the first signal or the second signal). In this case, the terminal device only needs to send the first information to the access network device, and then the access network device sends the first information to the core network device, so that the core network device determines, based on the first information, that the terminal device receives the first signal or the second signal. Further, the core network device sends the determined result (where the terminal device receives the first signal or the second signal) to the access network device, so that the access network device may send a paging message to the terminal device based on the result (where the terminal device receives the first signal or the second signal) determined by the core network device.

In conclusion, in case 1, the terminal device needs to send the first information to the access network device, but does not need to send the second information to the access network device. The access network device needs to send the first information to the core network device. The core network device needs to send the second information to the access network device, but the access network device does not need to send the second information to the terminal device.

Case 2: The terminal device and the core network device determine, in different manners, that the terminal device receives the first signal or the second signal.

In this case, the result determined by the terminal device based on the first information (where the terminal device receives the first signal or the second signal) may be inconsistent with the result determined by the core network device based on the first information (where the terminal device receives the first signal or the second signal).

In this case, the terminal device sends the first information to the access network device, and selectively sends (it is understood as that the terminal device may send or may not send) the second information to the access network device, and the access network device sends information (the first information, or the first information and the second information) received from the terminal device to the core network device.

When the information received by the core network device from the access network is the first information and the second information, if the core network device determines, based on the first information, that the signal (the first signal or the second signal) received by the terminal device is the same as a signal (determined by the terminal device) received by the terminal device and indicated by the second information, the core network device sends indication information to the access network device, to indicate the access network device to send a determined signal (where the signal may be understood as being determined by the terminal device, or may be understood as being determined by the core network device) to the terminal device based on the second information. If the core network device determines, based on the first information, that the signal (the first signal or the second signal) received by the terminal device is different from the signal (determined by the terminal device) received by the terminal device and indicated by the second information, the core network device sends the indication information to the access network device, to indicate the access network device to page the terminal device based on the signal determined by the core network device.

When the information received by the core network device from the access network device is the first information, the foregoing process described in S303 to S306 is performed. In other words, the core network device determines, based on the first information, that the terminal device receives the first signal or the second signal, and sends a determined result (the first signal or the second signal) to the access network device, so that the access network device pages the terminal device based on the determined result (the first signal or the second signal). The access network device also sends, to the terminal device, the result (the first signal or the second signal) determined by the core network device, so that the terminal device subsequently receives a signal corresponding to the result (the first signal or the second signal).

In conclusion, in case 2, the terminal device sends the first information to the access network device, and selectively sends (it is understood as that the terminal device may send or may not send) the second information to the access network device. Regardless of whether determined results (where the terminal device receives the first signal or the second signal) of the terminal device and the core network device are the same or different, the result determined by the core network device is used. The access network device pages the terminal device based on the result (where the terminal device receives the first signal or the second signal) determined by the core network device.

It can be seen that by implementing the paging method described in FIG. 6, a paging success rate of the terminal device can be increased, paging power consumption can be reduced, real-time performance of a downlink service of UE can be ensured, and data sending between the network device and the UE can be reduced to save communication resources.

FIG. 7 is a schematic diagram of a structure of a communication apparatus 700 according to an embodiment of this application. The communication apparatus shown in FIG. 7 may be configured to implement some or all functions of the terminal device in embodiments corresponding to the foregoing paging methods, implement some or all functions of the access network device in embodiments corresponding to the foregoing paging methods, or implement some or all functions of the core network device in embodiments corresponding to the foregoing paging methods. The communication apparatus shown in FIG. 7 may be configured to implement some or all functions of the terminal device in the method embodiment described in FIG. 3 or FIG. 6, some or all functions of the access network device in the method embodiment described in FIG. 3 or FIG. 6, and some or all functions of the core network device in the method embodiment described in FIG. 3 or FIG. 6.

The apparatus may be a terminal device, an apparatus in a terminal device, or an apparatus that can be used together with a terminal device; the apparatus may be an access network device, an apparatus in an access network device, or an apparatus that can be used together with an access network device; and the apparatus may be a core network device, an apparatus in a core network device, or an apparatus that can be used together with a core network device. The communication apparatus may alternatively be a chip system. The communication apparatus shown in FIG. 7 may include a communication module 701 and a processing module 702.

In an embodiment, the apparatus may be a terminal device, an apparatus in a terminal device, or may be an apparatus that can be used together with a terminal device.

In this case, the communication module 701 is configured to send first information to a first network device, where the first information includes a signal coverage level of the terminal device and whether the terminal device has a capability of receiving a first signal; receiving second information from the first network device, where the second information indicates the terminal device to receive the first signal or a second signal, the first signal is used to page or wake up the terminal device, the second signal is used to page the terminal device or indicates whether the terminal device receives paging, formats of the first signal and the second signal are different, and the formats include at least one of the following: coding, modulation, and multiple access; and receiving, from the first network device, a signal indicated by the second information.

In another embodiment, the apparatus may be a terminal device, an apparatus in a terminal device, or an apparatus that can be used together with a terminal device.

In this case, the processing module 702 is configured to determine, based on first information, that the terminal device receives a first signal or a second signal, where the first information includes a signal coverage level of the terminal device and whether the terminal device has a capability of receiving the first signal, the first signal is used to page or wake up the terminal device, and the second signal is used to page the terminal device or indicates whether the terminal device receives paging, formats of the first signal and the second signal are different, and the formats include at least one of the following: coding, modulation, and multiple access.

The communication module 701 is configured to receive a determined signal from a first network device.

In still another embodiment, the apparatus may be an access network device (a first network device), an apparatus in an access network device, or an apparatus that can be used together with an access network device.

In this case, the communication module 701 is configured to receive first information from a terminal device, where the first information includes a signal coverage level of the terminal device and whether the terminal device has a capability of receiving a first signal; send second information to the terminal device, where the second information indicates the terminal device to receive the first signal or a second signal, the first signal is used to page or wake up the terminal device, the second signal is used to page the terminal device or indicates whether the terminal device receives paging, formats of the first signal and the second signal are different, and the formats include at least one of the following: coding, modulation, and multiple access; and send, to the terminal device, a signal indicated by the second information.

In still another embodiment, the apparatus may be an access network device (a first network device), an apparatus in an access network device, or an apparatus that can be used together with an access network device.

In this case, the communication module 701 is configured to receive first information from a terminal device, where the first information includes a signal coverage level of the terminal device and whether the terminal device has a capability of receiving a first signal; receive second information from a second network device, where the second information indicates the terminal device to receive the first signal or a second signal, the first signal is used to page or wake up the terminal device, the second signal is used to page the terminal device or indicates whether the terminal device receives paging, formats of the first signal and the second signal are different, and the formats include at least one of the following: coding, modulation, and multiple access; and send, to the terminal device, a signal indicated by the second information.

In still another embodiment, the apparatus may be a core network device (a second network device), an apparatus in a core network device, or an apparatus that can be used together with a core network device.

In this case, the communication module 701 is configured to receive first information from a first network device, where the first information includes a signal coverage level of a terminal device and whether the terminal device has a capability of receiving a first signal.

The processing module 702 is configured to determine, based on the first information, that the terminal device receives the first signal or a second signal, where the first signal is used to page or wake up the terminal device, the second signal is used to page the terminal device or indicates whether the terminal device receives paging, formats of the first signal and the second signal are different, and the formats include at least one of the following: coding, modulation, and multiple access.

The communication module 701 is further configured to send second information to the first network device, where the second information indicates the terminal device to receive the first signal or the second signal.

In a possible implementation, if the signal coverage level of the terminal device is greater than or equal to a first threshold, and the terminal device has the capability of receiving the first signal, the processing module 702 is configured to determine that the terminal device receives the first signal.

In a possible implementation, the first information further includes an energy-saving level of the terminal device. If the signal coverage level of the terminal device is greater than or equal to the first threshold, the energy-saving level of the terminal device is greater than or equal to a second threshold, and the terminal device has the capability of receiving the first signal, the processing module 702 is configured to determine that the terminal device receives the first signal.

In a possible implementation, when the first signal is used to page the terminal device, the first signal indicates the terminal device to establish or resume a radio resource control connection; or when the first signal is used to wake up the terminal device, the first signal indicates the terminal device to receive paging via the second signal, where the paging indicates the terminal device to establish or resume a radio resource control connection.

In a possible implementation, when the second signal is used to page the terminal device, the second signal indicates whether the terminal device establishes or resumes the radio resource control connection; or when the second signal indicates whether the terminal device receives paging, the second signal indicates whether the terminal device receives paging on at least one paging occasion, where the paging indicates whether the terminal device establishes or resumes the radio resource control connection.

In a possible implementation, power consumption of receiving the first signal the terminal device is less than power consumption of receiving the second signal by the terminal device.

In a possible implementation, the terminal device has a first circuit and a second circuit, the first signal is a signal received by the terminal device by using the first circuit, and the second signal is a signal received by the terminal device by using the second circuit.

In a possible implementation, when the first signal is used to page the terminal device, the first signal is used to wake up the first circuit and the second circuit, and indicates the terminal device to establish or resume the radio resource control connection; or when the first signal is used to wake up the terminal device, the first signal is used to wake up the first circuit and the second circuit, and indicates the terminal device to receive paging by using the second circuit, where the paging indicates the terminal device to establish or resume the radio resource control connection.

In a possible implementation, when the second signal is used to page the terminal device, the second signal is used to wake up the second circuit, and indicates whether the terminal device establishes or resumes the radio resource control connection.

Alternatively, when the second signal indicates whether the terminal device receives paging, the second signal is used to wake up the second circuit, and indicates whether the terminal device receives paging on at least one paging occasion, where the paging indicates whether the terminal device establishes or resumes the radio resource control connection.

In a possible implementation, the first information is sent when the terminal device is attached or when a tracking area is updated.

For more detailed descriptions of the communication module 701 and the processing module 702, refer to related descriptions performed by the terminal device in the foregoing method embodiments, related descriptions performed by the access network device (the first network device) in embodiments, or related descriptions performed by the core network device (the second network device) in embodiments. This is not described herein again.

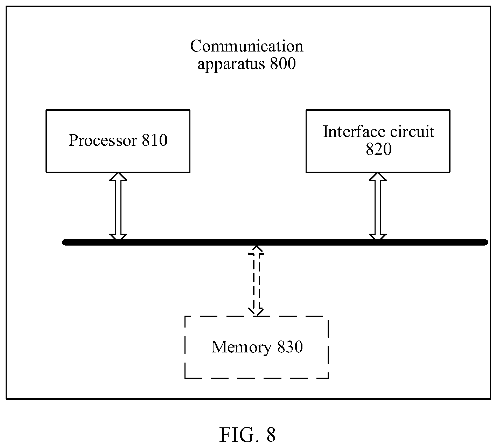

FIG. 8 is a schematic diagram of a structure of a communication apparatus 800 according to an embodiment of this application. As shown in FIG. 8, the communication apparatus 800 includes a processor 810 and an interface circuit 820. The processor 810 and the interface circuit 820 are coupled to each other. It may be understood that the interface circuit 820 may be a transceiver or an input/output interface. Optionally, the communication apparatus 800 may further include a memory 830, configured to store instructions to be executed by the processor 810, store input data needed for running instructions by the processor 810, or store data generated after the processor 810 runs instructions.

When the communication apparatus 800 is configured to implement the method in the foregoing method embodiments, the processor 810 is configured to perform a function of the processing module 702, and the interface circuit 820 is configured to perform a function of the communication module 701.

When the communication apparatus is a chip used in a terminal device, the chip in the terminal device implements functions of the terminal device in the foregoing method embodiments. The chip in the terminal device receives information from another module (for example, a radio frequency module or an antenna) in the terminal device, where the information is sent by an access network device to the terminal device; or the chip in the terminal device sends information to another module (for example, a radio frequency module or an antenna) in the terminal device, where the information is sent by the terminal device to an access network device.

When the communication apparatus is a chip used in an access network device (a first network device), the chip in the access network device implements functions of the access network device in the foregoing method embodiments. The chip in the access network device receives information from another module (for example, a radio frequency module or an antenna) in the access network device, where the information is sent by the terminal device to the access network device; or the chip in the access network device sends information to another module (for example, a radio frequency module or an antenna) in the access network device, where the information is sent by the access network device to the terminal device.

When the communication apparatus is a chip used in a core network device (a second network device), the chip in the core network device implements functions of the core network device in the foregoing method embodiments. The chip in the core network device receives information from another network element in the core network device, where the information is sent by the core network device to the core network device; or, the chip in the core network device sends information to another network element in the core network device, where the information is sent by the core network device to the access network device.

It may be understood that the processor in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of the processor executing software instructions. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk drive, a removable hard disk drive, a CD-ROM, or any storage medium in another form well-known in the art. For example, a storage medium is coupled to the processor, so that the processor can read information from the storage medium and write information into the storage medium. Certainly, the storage medium may be a component of the processor. The processor and the storage medium may be located in the ASIC. In addition, the ASIC may be located in the access network device or the terminal device. Certainly, the processor and the storage medium may alternatively exist in the core network device, the access network device, or the terminal device as discrete assemblies.

All or a part of the foregoing embodiments may be implemented by using software, hardware, firmware, or any combination thereof. When the software is used to implement embodiments, all or a part of embodiments may be implemented in a form of a computer program product. The computer program product includes one or more computer programs or instructions. When the computer program or the instructions are loaded and executed on a computer, all or a part of the procedures or functions in embodiments of this application are executed. The computer may be a general-purpose computer, a special-purpose computer, a computer network, or another programmable apparatus. The computer program or the instructions may be stored in a computer-readable storage medium, or may be transmitted via a computer-readable storage medium. The computer-readable storage medium may be any usable medium accessible by the computer, or a data storage device, for example, a server integrating one or more usable media. The usable medium may be a magnetic medium, for example, a floppy disk, a hard disk drive, or a magnetic tape; may be an optical medium, for example, a DVD; or may be a semiconductor medium, for example, a solid state drive (solid state drive, SSD).

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more than two. "And/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" usually indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

An embodiment of this application further provides a computer-readable storage medium. The computer-readable storage medium stores computer-executable instructions. When the computer-executable instructions are executed, the method performed by the terminal device in the foregoing method embodiments is implemented.

An embodiment of this application further provides a computer-readable storage medium. The computer-readable storage medium stores computer-executable instructions. When the computer-executable instructions are executed, the method performed by the core network device, the access network device, or the terminal device in the foregoing method embodiments is implemented.

An embodiment of this application further provides a computer program product. The computer program product includes a computer program. When the computer program is executed, the method performed by the core network device, the access network device, or the terminal device in the foregoing method embodiments is implemented.

An embodiment of this application further provides a communication system. The communication system includes a core network device, an access network device, or a terminal device. The terminal device is configured to perform the method performed by the terminal device in the foregoing method embodiments. The access network device is configured to perform the method performed by the access network device in the foregoing method embodiments. The core network device is configured to perform the method performed by the core network device in the foregoing method embodiments.

It should be noted that for brief description, the foregoing method embodiments are represented as a series of action combinations. However, a person skilled in the art should appreciate that this application is not limited to the described order of the actions, because according to this application, some steps may be performed in another order or simultaneously. In addition, it should be further appreciated by a person skilled in the art that embodiments described in this specification each belong to preferred embodiments, and related actions and modules are not necessarily needed by this application.

Cross reference may be made to descriptions of embodiments provided in this application, and the descriptions of embodiments have different focuses. For a part not described in detail in an embodiment, refer to related descriptions of another embodiment. For ease and brevity of description, for example, for functions and performed steps of the apparatuses and devices provided in embodiments of this application, refer to related descriptions of method embodiments of this application. The method embodiments and the apparatus embodiments may also be referenced, combined, or cited to each other.

Finally, it should be noted that the foregoing embodiments are merely intended for describing the technical solutions of this application other than limiting this application. Although this application is described in detail with reference to the foregoing embodiments, a person of ordinary skill in the art should understand that the person may still make modifications to the technical solutions described in the foregoing embodiments or make equivalent replacements to a part of or all technical features thereof. However, these modifications and replacements do not make the essence of the corresponding technical solutions depart from the scope of the technical solutions of embodiments of this application.

## Claims

1. A paging method, wherein the method is applied to a terminal device, and the method comprises:
sending first information to a first network device, wherein the first information comprises a signal coverage level of the terminal device and whether the terminal device has a capability of receiving a first signal;
receiving second information from the first network device, wherein the second information indicates the terminal device to receive the first signal or a second signal, the first signal is used to page or wake up the terminal device, the second signal is used to page the terminal device or indicates whether the terminal device receives paging, formats of the first signal and the second signal are different, and the formats comprise at least one of the following: coding, modulation, and multiple access; and
receiving, from the first network device, a signal indicated by the second information.

2. A paging method, wherein the method is applied to a terminal device, and the method comprises:
determining, based on first information, that the terminal device receives a first signal or a second signal, wherein the first information comprises a signal coverage level of the terminal device and whether the terminal device has a capability of receiving the first signal, the first signal is used to page or wake up the terminal device, the second signal is used to page the terminal device or indicates whether the terminal device receives paging, formats of the first signal and the second signal are different, and the formats comprise at least one of the following: coding, modulation, and multiple access; and
receiving a determined signal from a first network device.

3. A paging method, wherein the method is applied to a first network device, and the method comprises:
receiving first information from a terminal device, wherein the first information comprises a signal coverage level of the terminal device and whether the terminal device has a capability of receiving a first signal;
sending second information to the terminal device, wherein the second information indicates the terminal device to receive the first signal or a second signal, the first signal is used to page or wake up the terminal device, the second signal is used to page the terminal device or indicates whether the terminal device receives paging, formats of the first signal and the second signal are different, and the formats comprise at least one of the following: coding, modulation, and multiple access; and
sending, to the terminal device, a signal indicated by the second information.

4. A paging method, wherein the method is applied to a first network device, and the method comprises:
receiving first information from a terminal device, wherein the first information comprises a signal coverage level of the terminal device and whether the terminal device has a capability of receiving a first signal;
receiving second information from a second network device, wherein the second information indicates the terminal device to receive the first signal or a second signal, the first signal is used to page or wake up the terminal device, the second signal is used to page the terminal device or indicates whether the terminal device receives paging, formats of the first signal and the second signal are different, and the formats comprise at least one of the following: coding, modulation, and multiple access; and
sending, to the terminal device, a signal indicated by the second information.

5. A paging method, wherein the method is applied to a second network device, and the method comprises:
receiving first information from a first network device, wherein the first information comprises a signal coverage level of a terminal device and whether the terminal device has a capability of receiving a first signal;
determining, based on the first information, that the terminal device receives the first signal or a second signal, wherein the first signal is used to page or wake up the terminal device, the second signal is used to page the terminal device or indicates whether the terminal device receives paging, formats of the first signal and the second signal are different, and the formats comprise at least one of the following: coding, modulation, and multiple access; and
sending second information to the first network device, wherein the second information indicates the terminal device to receive the first signal or the second signal.

6. The method according to any one of claims 1 to 5, wherein the determining, based on the first information, that the terminal device receives the first signal or a second signal comprises:
if the signal coverage level of the terminal device is greater than or equal to a first threshold, and the terminal device has the capability of receiving the first signal, determining that the terminal device receives the first signal.

7. The method according to any one of claims 1 to 5, wherein the first information further comprises an energy-saving level of the terminal device, and the determining, based on the first information, that the terminal device receives the first signal or a second signal comprises:
if the signal coverage level of the terminal device is greater than or equal to a first threshold, the energy-saving level of the terminal device is greater than or equal to a second threshold, and the terminal device has the capability of receiving the first signal, determining that the terminal device receives the first signal.

8. The method according to any one of claims 1 to 7, wherein when the first signal is used to page the terminal device, the first signal indicates the terminal device to establish or resume a radio resource control connection; or
when the first signal is used to wake up the terminal device, the first signal indicates the terminal device to receive paging via the second signal, wherein the paging indicates the terminal device to establish or resume a radio resource control connection.

9. The method according to any one of claims 1 to 8, wherein when the second signal is used to page the terminal device, the second signal indicates whether the terminal device establishes or resumes the radio resource control connection; or
when the second signal indicates whether the terminal device receives paging, the second signal indicates whether the terminal device receives paging on at least one paging occasion, wherein the paging indicates whether the terminal device establishes or resumes the radio resource control connection.

10. The method according to any one of claims 1 to 9, wherein power consumption of receiving the first signal by the terminal device is less than power consumption of receiving the second signal by the terminal device.

11. The method according to any one of claims 1 to 10, wherein the terminal device has a first circuit and a second circuit, the first signal is a signal received by the terminal device by using the first circuit, and the second signal is a signal received by the terminal device by using the second circuit.

12. The method according to claim 11, wherein when the first signal is used to page the terminal device, the first signal is used to wake up the first circuit and the second circuit, and indicates the terminal device to establish or resume the radio resource control connection; or
when the first signal is used to wake up the terminal device, the first signal is used to wake up the first circuit and the second circuit, and indicates the terminal device to receive paging by using the second circuit, wherein the paging indicates the terminal device to establish or resume the radio resource control connection.

13. The method according to claim 11 or 12, wherein when the second signal is used to page the terminal device, the second signal is used to wake up the second circuit, and indicates whether the terminal device establishes or resumes the radio resource control connection; or
when the second signal indicates whether the terminal device receives paging, the second signal is used to wake up the second circuit, and indicates whether the terminal device receives paging on at least one paging occasion, wherein the paging indicates whether the terminal device establishes or resumes the radio resource control connection.

14. The method according to any one of claims 1 to 13, wherein the first information is sent when the terminal device is attached or when a tracking area is updated.

15. A communication apparatus, comprising:
a communication module, configured to send first information to a first network device, wherein the first information comprises a signal coverage level of a terminal device and whether the terminal device has a capability of receiving a first signal; receive second information from the first network device, wherein the second information indicates the terminal device to receive the first signal or a second signal, the first signal is used to page or wake up the terminal device, the second signal is used to page the terminal device or indicates whether the terminal device receives paging, formats of the first signal and the second signal are different, and the formats comprise at least one of the following: coding, modulation, and multiple access; and receive, from the first network device, a signal indicated by the second information.

16. A communication apparatus, comprising:
a processing module, configured to determine, based on first information, that a terminal device receives a first signal or a second signal, wherein the first information comprises a signal coverage level of the terminal device and whether the terminal device has a capability of receiving the first signal, the first signal is used to page or wake up the terminal device, the second signal is used to page the terminal device or indicates whether the terminal device receives paging, formats of the first signal and the second signal are different, and the formats comprise at least one of the following: coding, modulation, and multiple access; and
a communication module, configured to receive a determined signal from a first network device.

17. A communication apparatus, comprising:
a communication module, configured to receive first information from a terminal device, wherein the first information comprises a signal coverage level of the terminal device and whether the terminal device has a capability of receiving a first signal; send second information to the terminal device, wherein the second information indicates the terminal device to receive the first signal or a second signal, the first signal is used to page or wake up the terminal device, the second signal is used to page the terminal device or indicates whether the terminal device receives paging, formats of the first signal and the second signal are different, and the formats comprise at least one of the following: coding, modulation, and multiple access; and send, to the terminal device, a signal indicated by the second information.

18. A communication apparatus, comprising:
a communication module, configured to receive first information from a terminal device, wherein the first information comprises a signal coverage level of the terminal device and whether the terminal device has a capability of receiving a first signal; receiving second information from a second network device, wherein the second information indicates the terminal device to receive the first signal or a second signal, the first signal is used to page or wake up the terminal device, the second signal is used to page the terminal device or indicates whether the terminal device receives paging, formats of the first signal and the second signal are different, and the formats comprise at least one of the following: coding, modulation, and multiple access; and sending, to the terminal device, a signal indicated by the second information.

19. A communication apparatus, comprising:
a communication module, configured to receive first information from a first network device, wherein the first information comprises a signal coverage level of a terminal device and whether the terminal device has a capability of receiving a first signal; and
a processing module, configured to determine, based on the first information, that the terminal device receives the first signal or a second signal, wherein the first signal is used to page or wake up the terminal device, the second signal is used to page the terminal device or indicates whether the terminal device receives paging, formats of the first signal and the second signal are different, and the formats comprise at least one of the following: coding, modulation, and multiple access; and
the communication module is further configured to send second information to the first network device, wherein the second information indicates the terminal device to receive the first signal or the second signal.

20. The apparatus according to any one of claims 15 to 19, wherein the processing module is configured to:
if the signal coverage level of the terminal device is greater than or equal to a first threshold, and the terminal device has the capability of receiving the first signal, determine that the terminal device receives the first signal.

21. The apparatus according to any one of claims 15 to 19, wherein the first information further comprises an energy-saving level of the terminal device, and the processing module is configured to:
if the signal coverage level of the terminal device is greater than or equal to a first threshold, the energy-saving level of the terminal device is greater than or equal to a second threshold, and the terminal device has the capability of receiving the first signal, determine that the terminal device receives the first signal.

22. The apparatus according to any one of claims 15 to 21, wherein when the first signal is used to page the terminal device, the first signal indicates the terminal device to establish or resume a radio resource control connection; or
when the first signal is used to wake up the terminal device, the first signal indicates the terminal device to receive paging via the second signal, wherein the paging indicates the terminal device to establish or resume a radio resource control connection.

23. The apparatus according to any one of claims 15 to 22, wherein when the second signal is used to page the terminal device, the second signal indicates whether the terminal device establishes or resumes the radio resource control connection; or
when the second signal indicates whether the terminal device receives paging, the second signal indicates whether the terminal device receives paging on at least one paging occasion, wherein the paging indicates whether the terminal device establishes or resumes the radio resource control connection.

24. The apparatus according to any one of claims 15 to 23, wherein power consumption of receiving the first signal by the terminal device is less than power consumption of receiving the second signal by the terminal device.

25. The apparatus according to any one of claims 15 to 24, wherein the terminal device has a first circuit and a second circuit, the first signal is a signal received by the terminal device by using the first circuit, and the second signal is a signal received by the terminal device by using the second circuit.

26. The apparatus according to claim 25, wherein when the first signal is used to page the terminal device, the first signal is used to wake up the first circuit and the second circuit, and indicates the terminal device to establish or resume the radio resource control connection; or
when the first signal is used to wake up the terminal device, the first signal is used to wake up the first circuit and the second circuit, and indicates the terminal device to receive paging by using the second circuit, wherein the paging indicates the terminal device to establish or resume the radio resource control connection.

27. The apparatus according to claim 25 or 26, wherein when the second signal is used to page the terminal device, the second signal is used to wake up the second circuit, and indicates whether the terminal device establishes or resumes the radio resource control connection; or
when the second signal indicates whether the terminal device receives paging, the second signal is used to wake up the second circuit, and indicates whether the terminal device receives paging on at least one paging occasion, wherein the paging indicates whether the terminal device establishes or resumes the radio resource control connection.

28. The apparatus according to any one of claims 15 to 27, wherein the first information is sent when the terminal device is attached or when a tracking area is updated.

29. A communication apparatus, comprising a processor and an interface circuit, wherein the interface circuit is configured to receive a signal from another communication apparatus other than the communication apparatus and transmit the signal to the processor, or send a signal from the processor to the another communication apparatus other than the communication apparatus, and the processor is configured to implement the method according to any one of claims 1 to 14 by using a logic circuit or executing code instructions.

30. A computer-readable storage medium, wherein the storage medium stores a computer program or instructions, and when the computer program or the instructions are executed by a communication apparatus, the method according to any one of claims 1 to 14 is implemented.
